# EUROPEAN PATENT SPECIFICATION

(11) **EP 1 017 053 B1**
(45) Date of publication and mention of the grant of the patent: **31.03.2004**
(21) Application number: 99309140.4
(22) Date of filing: 17.11.1999
(51) Int. Cl.: G11B 20/10

(54) **Data reproduction apparatus for optical disc system**
Gerät zur Datenwiedergabe für ein optisches Plattensystem
Système de reproduction de données pour un système de disque optique

(30) Priority: 18.11.1998 KR 9849542
(43) Date of publication of application: 05.07.2000
(73) Proprietor: SAMSUNG ELECTRONICS CO., LTD., Suwon-City, Kyungki-do (KR)
(72) Inventor: Shim, Jae-Seong, Seoul (KR); Won, Yong-Kwang, Hwasung-kun, Kyungki-do (KR); Park, Hyun-Soo, Seocho-gu, Seoul (KR); Kim, Il-Kwon, Seoul (KR)
(74) Representative: Robinson, Ian Michael

(56) References cited:
- US-A- 5 721 548
- M. TOBITA ET AL: "Viterbi Detection of Partial Response on a Magneto-Optical Recording Channel" PROCEEDINGS OF THE SPIE, 9 February 1992 (1992-02-09), pages 166-173, XP002057023
- PATENT ABSTRACTS OF JAPAN vol. 1998, no. 9, 31 July 1998 (1998-07-31) & JP 10 106160 A (SANYO ELECTRIC CO LTD), 24 April 1998 (1998-04-24)

## Description

The present invention relates to a data reproduction apparatus for an optical disc system.

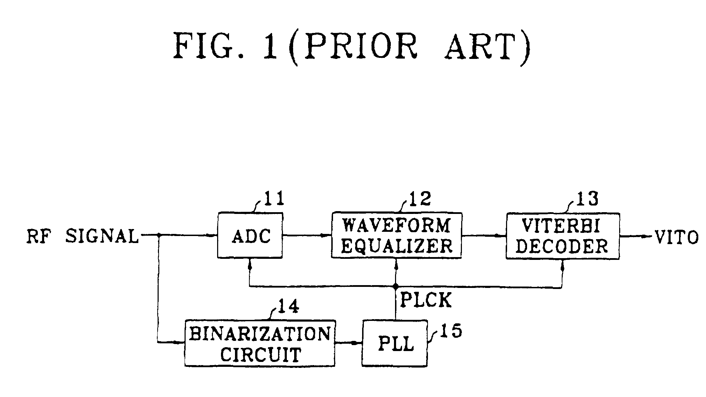

Figure 1 is a block diagram showing a data reproduction apparatus for a conventional optical disc system. In the Figure 1 apparatus, a radio frequency (RF) signal read from an optical disc is input to an analog-to - digital converter (ADC) 11 and a binarization circuit 14. The binarization circuit 14 binarizes the RF signal and outputs the binarization signal to a phase locked loop (PLL) 15. The PLL 15 receives the binarization signal and generates a clock signal PLCK synchronised with the RF signal. The clock signal PLCK is supplied to the ADC 11, a waveform equalizer 12 and a Viterbi decoder 13. The ADC 11 converts the input analog RF signal into a digital RF signal and outputs the digital RF signal to the waveform equalizer 12. The waveform equalizer 12 receives the digital RF signal and waveform-equalizes the received digital RF signal in the form appropriate for the Viterbi decoder 13. The Viterbi decoder 13 receives the waveform equalized signal to then be Viterbi-decoded and outputs the result as a reproduction signal (VITO). The Viterbi decoding can restore the damaged signal when the RF signal is damaged due to noise interference in the channel, and is widely used in a hard disc drive (HDD).

However, in the case that asymmetry exists in the input RF signal in the conventional data reproduction apparatus, the Viterbi decoder does not restore the RF signal to thereby degenerate a quality of the reproduced data.

M.TOBITA ET AL: "Viterbi Detection of Partial Response on a Magneto-Optical Recording Channel" PROCEEDINGS OF THE SPIE, 9 February 1992, pages 166-173, XP002057023, discloses a magneto-optical disk wherein the MO RF signal is clamped to eliminate low-frequency disturbance generated by fluctuation of disk reflectance. The clamped RF signal is then analogue to digital converted, equalised and viterbi decoded.

PATENT ABSTRACTS OF JAPAN vol. 1998, no.9 31 July 1998 & JP 10 106160 A (SANYO ELECTRIC CO LTD), discloses a digital conversion and processing section of a reproducing circuit for an optical disk, that detects a dropout of an input RF signal and maintains a slice level at a specified level during the dropout.

It is an aim of the present invention to provide a data reproduction apparatus for an optical disc system which corrects asymmetry of a RF signal to improve a quality of the reproduced data.

According to the present invention there is provided a data reproduction apparatus as set forth in claim 1 appended hereto. Preferred features of the invention will be apparent from the dependent claims and the description which follows.

According to one aspect of the present invention there is provided a data reproduction apparatus for an optical disc system in which a radio frequency (RF) signal detected from an optical recording medium is decoded to reproduce data, the data reproduction apparatus comprising: an analog-to-digital converter (ADC) for sampling the input RF signal and outputting the sampled result: an adder for adding the sampled signal and an asymmetry correction signal and outputting the added signal; a blank/defect detector for generating a blank detection signal indicating a blank in the case that a change in data is not detected from the added signal for a predetermined time; a correction signal generator for calculating a digital sum value (DSV) from the received added signal, generating an asymmetry correction signal based on the calculated DSV, and outputting the generated asymmetry correction signal to the adder; a waveform equalizer for waveform-equalizing the added signal; and a decoder for decoding the waveform-equalised signal and outputting the result. Here, the correction signal corrector temporarily stops a DSV calculation operation with respect to the interval of the corresponding added signal; in the case that the blank detection signal is applied.

Preferably, said decoder is a Viterbi decoder.

Preferably, said blank/defect detector generates the blank detection signal in the case that the edge of the data is not detected from the received signal for the predetermined time, or a signal having a predetermined level or higher is not detected.

Preferably, said correction signal generator receives the waveform equalized signal to calculate a DSV.

Preferably, the data reproduction apparatus further comprising a multiplexer for receiving the added signal and the waveform equalized signal and selecting one of the received signals according to an externally supplied select signal, to be supplied to the correction signal generator.

Preferably, said correction signal generator comprises: a sign detector for detecting the sign of the input signal; an up/down counter for up- or down-counting the input signal according to the detected sign and outputting the count value wherein the up/down counter stops the counting operation during the time when the blank detection signal is applied; a comparator for obtaining the absolute value of the count value, comparing the size of the obtained absolute value with a predetermined threshold value, and outputting a first comparison resultant signal if the absolute value is larger than the threshold value; and an operator for generating an asymmetry correction signal having a sign different from that of the count value in the case that the first comparison resultant signal is applied.

Preferably, the data reproduction apparatus further comprises: a filter coefficient adjuster for receiving the waveform equalised signal, extracting data corresponding to the intermediate level of the Viterbi decoder from the received signal, checking the size, and updating filter coefficients of the waveform equalizer based on the checked result; and a gain controller for receiving the waveform equalized signal, extracting data corresponding to the maximum level of the Viterbi decoder from the received signal, checking the size, and controlling the gain of the signal input to the ADC according to the checked result.

Preferably, the data corresponding to the intermediate level of said Viterbi decoder is a 3T level signal, and the maximum level is a 4T level signal, in which T is one clock period.

For a better understanding of the invention, and to show how embodiments of the same may be carried into effect, reference will now be made, by way of example, to the accompanying diagrammatic drawings in which:
Figure 1 is a block diagram showing data reproduction apparatus for a conventional optical disc system;
Figure 2 is a block diagram showing a data reproduction apparatus for an optical disc system according to one embodiment of the present invention;
Figure 3 is a graphical view showing a gain variation characteristic of a booster amplifier of Figure 2;
Figure 4 is a detailed circuit diagram of the blank/defect detector of Figure 2;
Figure 5 is a detailed circuit diagram of the ASM level generator of Figure 2;
Figure 6 is a detailed circuit diagram of the ADTGC unit of Figure 2; and
Figure 7 is a detailed circuit diagram of the AGC unit of Figure 2.

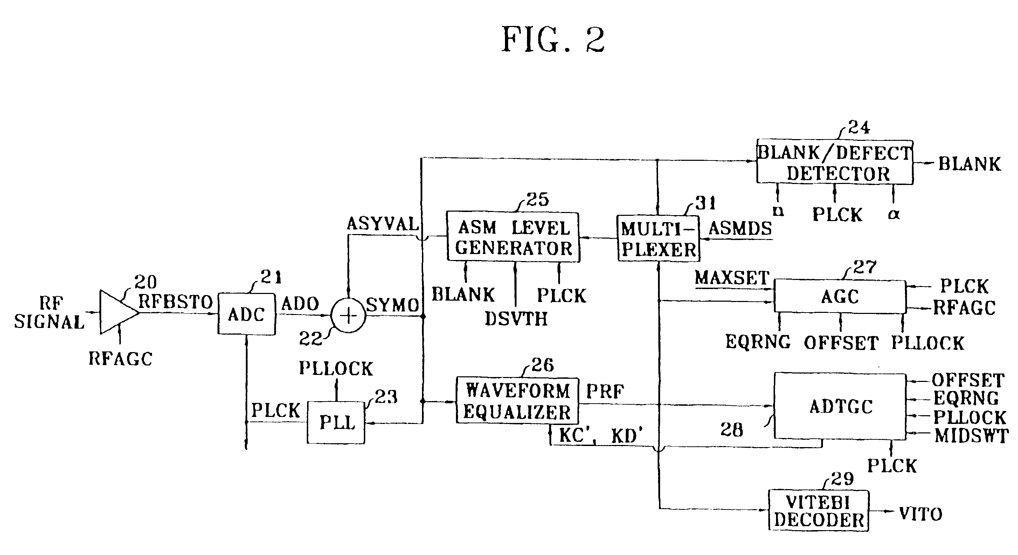

In Figure 2, a booster amplifier 20 receives a RF signal detected from an optical disc, generates an amplification signal RFBSTO and outputs the same to an analog-to-digital converter (ADC) 21. The ADC 21 generates a digital signal ADO and outputs the same to the first input port of an adder 22. The adder 22 adds the signal input via the first input port and an asymmetry correction signal ASYVAL input via the second input port, and outputs the added result SYMO to a phase locked loop (PLL) 23, a blank/defect detector 24, a waveform equalizer 26 and a multiplexer 31. The PLL 23 generates a clock signal PLCK and supplies the clock signal PLCK to the ADC 21 and the other circuit to be described later. The blank/defect detector 24 receives the SYMO signal and generates the blank/defect detection signal BLANK to then be supplied to the ASM level generator 25. The waveform equalizer 26 receives the SYMO signal and generates the waveform equalised signal PRF to then be output to an automatic gain control (AGC) unit 27, an adaptive Tₘᵢₙ gain control (ADTGC) unit 28, a Viterbi decoder 29 and a multiplexer 31. The multiplexer 31 receives the SYMO signal and the PRF signal and outputs one of the received signals according to a select signal ASMDS to the ASM level generator 25. The ASM level generator 25 receives the output of the multiplexer 31 and generates the ASYVAL signal to then be output to the second input port of the adder 22. The AGC 27 receives the PRF signal and generates a gain control signal RFAGC to then be supplied to the booster amplifier 20. The ADTGC unit 28 receives the PRF signal and generates filter coefficients KC' and KD' to then be supplied to the waveform equalizer 26. The Viterbi decoder 29 receives the PRF signal and outputs the reproduction signal VITO.

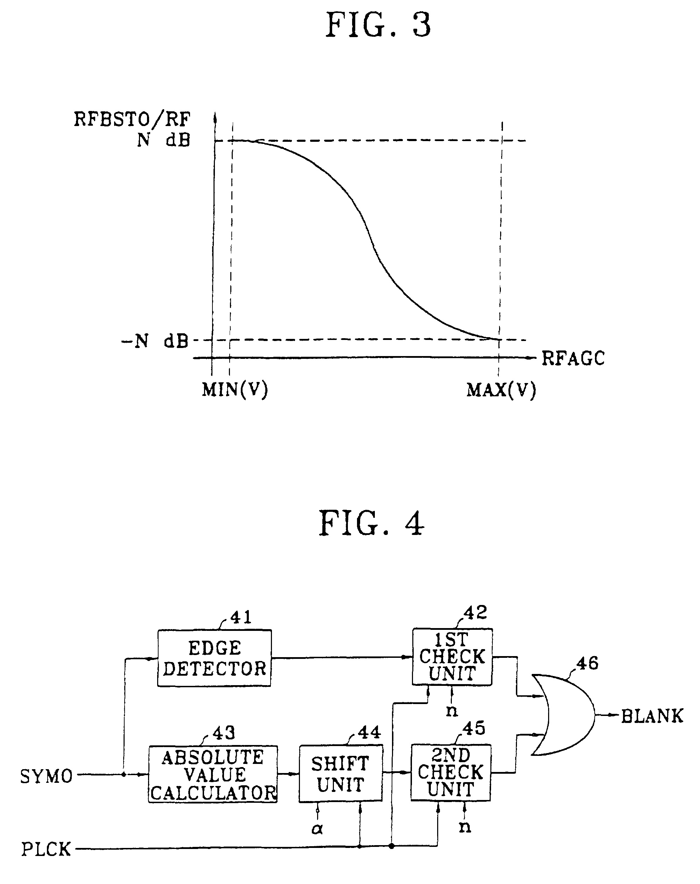

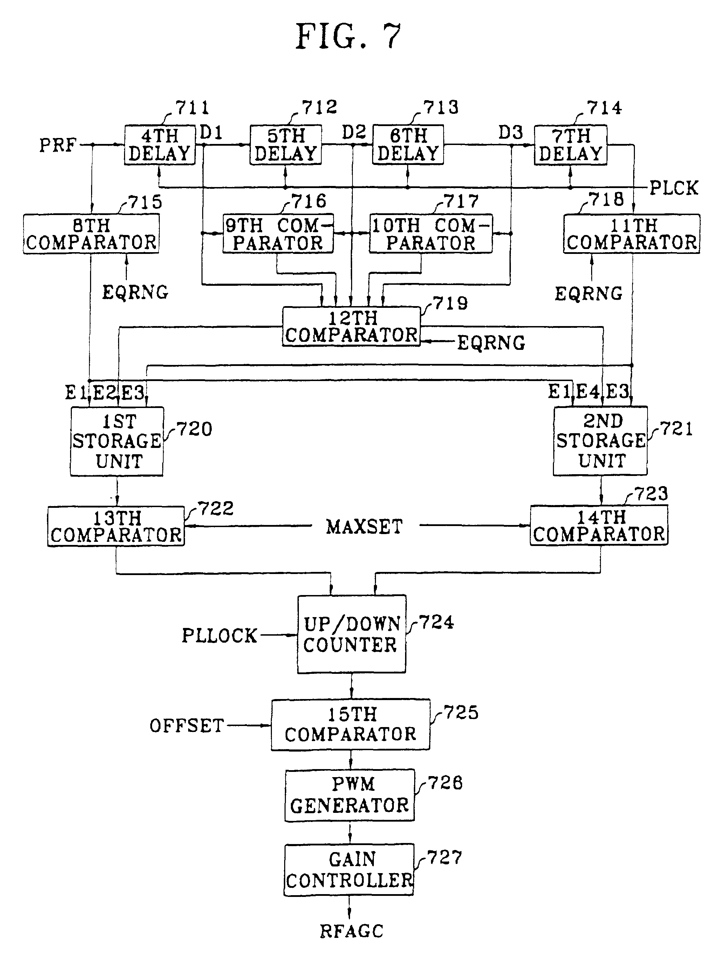

The operation of the Figure 2 apparatus having the above configuration will be described below with reference to Figures 3 and 7.

In Figure 2, the RF signal detected from an optical disc is input to the booster amplifier 20. The booster amplifier 20 has a gain variation characteristic as shown in Figure 3, and amplifies the RF signal according to the RFAGC signal supplied from the AGC unit 27 to be described later. However, at the initial time of operation in the Figure 2 apparatus, the input signal is amplified at an amplification rate set as an initial value. The ADC 21 receives the amplified RF signal RFBSTO, converts the same into an analog-to-digital basis, and outputs the digital signal ADO generated by the analog-to-digital conversion to the first input port of the adder 22. The adder 22 adds the ADO signal and the asymmetry correction signal ASYVAL input via the second input port. At initiation of the Figure 2 apparatus, the ASYVAL value is set as "0", the ADO signal is output as the added signal SYMO. The blank/defect detector 24 detects an interval where data is not recorded or is damaged due to defect on a disc from the received SYMO signal, in such a manner that an asymmetry level can be accurately detected in the ASM level generator 25.

The detailed configuration and operation of the blank/defect detector 24 will be described below with reference to Figure 4. The SYMO signal output from the adder 22 is input to an edge detector 41 and an absolute value calculator 43 in the blank/defect detector 24. The edge detector 41 detects an edge from the input SYMO signal and applies an edge detection signal to a first check unit 42. The first check unit 42 checks the length of a sign bit from the point in time when one edge detection signal is applied until the following edge detection signal is applied. The first check unit 42 generates a first check signal indicating that no variation exists in the input signal for an nT interval when an edge is not detected for the nT interval, to then be output to an OR gate 46. Here, T denotes a period of clock PLCK and n is an integer. The absolute value calculator 43 calculates an absolute value of the SYMO signal to then be output to a shift unit 44. The shift unit 44 shifts right the absolute value of the SYMO signal by a set value α supplied from a controller (not shown). A second check unit 45 checks whether a value of zero is sequentially input from the shift unit 44. In the case that a value of zero is sequentially input for the nT interval, the second check unit 45 generates a second check signal indicating that data larger than a predetermined size does not exist for the nT interval, to then be output to the OR gate 46. The OR gate 46 logically sums the outputs of the check units 42 and 45 and outputs the result. That is, if any one of the first and second check signals is applied, the OR gate 46 generates a blank/defect detection signal BLANK indicating that data has not been recorded or data has been lost.

Referring back to Figure 2, the waveform equalizer 26 receives the SYMO signal to perform a waveform equalization operation. The waveform equalizer 26 utilises filter coefficient values set as initial values at the initial time of operation. The multiplexer 31 selects one of the SYMO signal and waveform equalized signal PRF output from the waveform equalizer 26 according to the selection signal ASMDS and outputs the selected result to the ASM level generator 25. The ASM level generator 25 receives the output of the multiplexer 31 and detects an asymmetry level of the received signal.

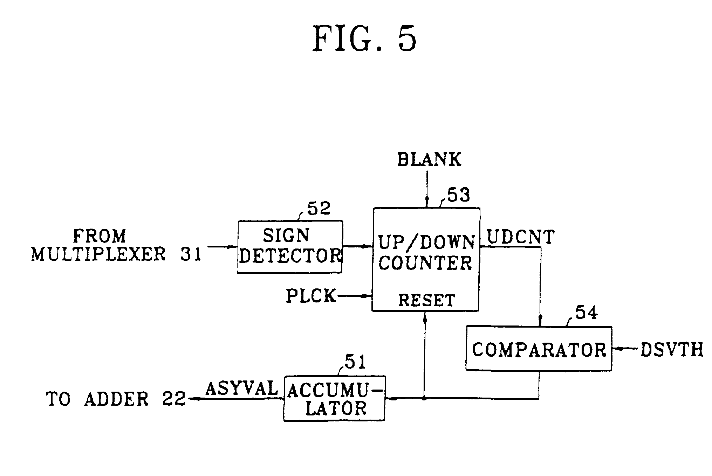

Figure 5 is a detailed circuit diagram of the ASM level generator of Figure 2. A sign detector 52 in the ASM level generator 25 detects a sign of the signal input from the multiplexer 31 and outputs the detected result to an up/down counter 53. The up/down counter 53 performs an up-counting when a sign detected in the sign detector 52 is positive (+) and down-counting when the former is negative (-). In the case that the BLANK signal is applied from the blank/defect detector 24, the counting operation is stopped since reliability with respect to the input data is lowered. The count value UDCNT of the up/down counter 53 is a digital sum value DSV with respect to the input data. As the DSV is larger, an asymmetry of the input signal becomes larger. A comparator 54 obtains an absolute value of the UDNCT and compares the obtained absolute value with a predetermined DSV threshold value DSVTH. The comparator 54 generates a determination resultant signal indicating that the absolute value of the UDCNT is larger than the DSVTH, if it is determined that the former is larger than the latter, to then be output to an accumulator 51 and reset the up/down counter 53.

The accumulator 51 generates the ASYVAL value based on the UDCNT value in the case that the determination resultant signal indicating the absolute value of the UDCNT is larger than the DSVTH is applied. In more detail, when a sign of the UDCNT is positive, the ASYVAL value having a negative sign and a size proportional to the absolute value of the UDCNT is generated. Meanwhile, when a sign of the UDCNT is negative, the ASYVAL value having a positive sign and a size proportional to the absolute value of the UDCNT is generated. The ASYVAL value is applied to the second input port of the adder 22 of Figure 2. The adder 22 adds the ASYVAL value to the current input signal input via the first input port, to thereby output the asymmetry corrected signal continuously.

Meanwhile, the ADTGC 28 extracts data corresponding to a 3T level which is an intermediate value of the data used in the Viterbi decoder 29 among the data input to the Viterbi decoder 29 and checks whether the extracted level is appropriate.

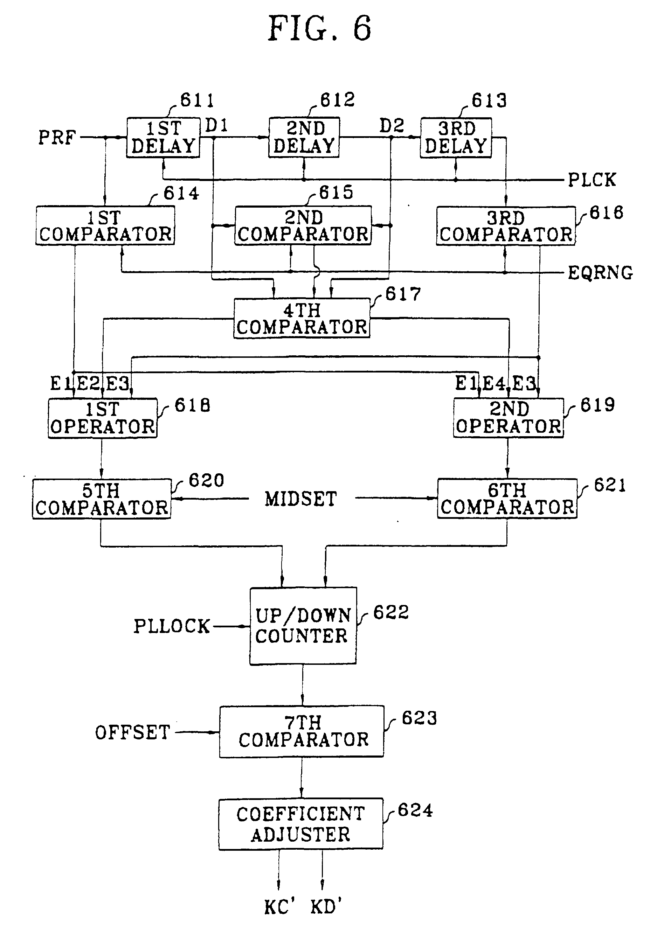

In Figure 6 showing a detailed circuit diagram of the ADTGC unit 28 of Figure 2, delays 611-613 and comparators 614-617 extract a signal corresponding to +/- 3T from the PRF signal. The delays 611-613 which are connected in series delay the waveform equalized signal PRF in sequence by one period of the PLCK. The comparator 614 obtains the absolute value of the input PRF signal, and compares the obtained absolute value with a reference value EQRNG for detecting a 3T signal. The comparator 614 judges that the input signal is a 3T signal in the case that the absolute value of the PRF is smaller than the EQRNG, to thus generate a first enable signal E1. The first enable signal E1 is applied to operators 618 and 619. The comparator 615 receives delay signals D1 and D2 output from the delays 611 and 612, and obtains the absolute value of a difference value between the delay signals. Also, the obtained absolute value is compared with the EQRNG. If the former is smaller than the latter, it is judged that D1 and D2 are signals having the similar levels, respectively. This means that the input data is synchronised with the PLL 23. The second comparator 615 outputs the determination resultant signal to the fourth comparator 617. The fourth comparator 617 receives the determination resultant signals D1 and D2 from the second comparator 615, and compares D1 and D2 with the EQRNG signal, respectively. In the result of comparison, when the delay signals D1 and D2 are larger than the EQRNG signal, it is determined that D1 and D2 are signals having a size larger than an appropriate level which is not close to a zero value, respectively, to thereby output a second enable signal E2 to the operator 618. In the mean time, when the delay signals D1 and D2 are smaller than the EQRNG signal, it is determined that D1 and D2 are signals having a size smaller than an appropriate level which is not close to a zero value, respectively, to thereby output a fourth enable signal E4 to the operator 619. The comparator 616 obtains the absolute value of the delay signal D3 output from the delay 613 and compares the obtained absolute value with the EQRNG. In the comparison result, if the absolute value of D3 is smaller than the EQRNG, a third enable signal E3 is generated to then be output to the operators 618 and 619. The operators 618 and 619 become enabled when all of the enable signals E1, E2 (or E4), and E3 are applied. Here, in the case that the enable signals E1, E2 and E3 are applied, the input data indicates a 3T signal synchronised with clock. In the case that the enable signal E1, E4 and E3 are applied, the input data indicates a -3T signal synchronised with clock. In the case that the operator 618 is enabled, the operator 618 adds the D1 and D2 with respect to the +3T signal, and outputs the result to a comparator 620. In the case that the operator 619 is enabled, the operator 619 adds the D1 and D2 with respect to the -3T signal, and outputs the result to a comparator 621. The comparator 620 compares the added result applied from the operator 618 with a standard intermediate value (MIDSET) corresponding to the 3T level at an operational initial time of the Viterbi decoder 29, and outputs the comparison result to an up/down counter 622. Likewise, the comparator 621 compares the added result applied from the operator 619 with the MIDSET and outputs the comparison result to the up/down counter 622. When a comparison result indicating the D1+D2 is larger than the MIDSET is applied from the comparator 620 or the comparator 621, the up/down counter 622 performs an up-counting. Reversely, when a comparison result indicating the D1+D2 is smaller than the MIDSET is applied, the up/down counter 622 performs a down-counting. The count value of the up/down counter 622 is applied to a comparator 623. The comparator 623 compares the count value with an externally supplied offset value OFFSET. If the count value exceeds the offset value, a signal indicating this it output to a coefficient adjuster 624. The coefficient adjuster 624 adjusts the filter coefficient values KC' and KD' of the waveform equalizer 26 in the case that a comparison resultant signal indicating the count value exceeds the OFFSET value is applied. The up/down counter 622 in the ADTGC 28 stops a count operation and stablises the operation of the circuit, in the case that a clock synchronisation signal PLLOCK applied from the PLL 23 indicates that data is not synchronised with clock.

Meanwhile, the AGC unit 27 extracts data corresponding to a 4T level which is maximum value of data used in the Viterbi decoder 29 among the data input to the Viterbi decoder 29 and checks whether the level of the extracted data is appropriate, in order to maintain the gain of the booster amplifier 20 to an appropriate value.

In Figure 7 showing a detailed circuit diagram of the AGC unit 27 of Figure 2, delays 711-714 and comparators 715-719 extract a signal corresponding to +/- 4T from the input PRF signal. The delays 711-714 which are connected in series delay the input PRF signal in sequence by one period of the PLCK. The comparator 715 detects a 4T level signal by using a reference signal EQRNG for detecting a 4T level. The comparator 715 generates a first enable signal E1 when a 4T level signal is detected, to then be output to storage devices 720 and 721. Also, the comparator 718 detects a 4T level signal from the delay signal D4. The comparator 718 generates a third enable signal E3 when a 4T level signal is detected, to then be output to the storage devices 720 and 721. The comparator 716 outputs a comparison resultant signal indicating that the D1 is smaller than the D2 to the comparator 719. The comparator 717 outputs a comparison resultant signal indicating that the D2 is larger than the D3 to the comparator 719. The comparator 719 receives the comparison resultant signals of the comparators 716 and 717 and outputs a second enable signal E2 to the first storage device 720 only when all of the D1, D2 and D3 are larger than the EQRNG. When all of the D1, D2 and D3 are smaller than the EQRNG, a fourth enable signal E4 is output to the storage device 721. The storage devices 720 and 721 become enabled only when all of the enable signals E1, E2 (or E4) and E3 are applied. The storage device 720 stores a D2 value with respect to the +4T signal and reads the stored value to output the same to a comparator 722. In the case that the storage device 721 is enabled, the storage device 721 stores a D2 value with respect to the - 4T signal and reads the store value to output the read result to a comparator 723. The comparator 722 compares the D2 of the +4T signal with an externally supplied standard maximum value MAXSET corresponding to a 4T level at the initial time of operation in the Viterbi decoder 29, and outputs the comparison result to an up/down counter 724. The comparator 723 compares the D2 of the - 4T signal with the MAXSET and outputs the comparison result to the up/down counter 724. In the case that D2 is larger than the MAXSET, the up/down counter 724 performs an up-counting, and in the case that D2 is smaller than the MAXSET, the up/down counter 724 performs a down-counting. The count value of the up/down counter 724 is applied to a comparator 725. The comparator 725 compares the count value with an externally supplied offset value OFFSET. When the count value exceeds the OFFSET value, a PWM generator 726 and a gain controller 727 generate a gain control signal RFAGC for controlling a gain of the booster amplifier 20 and supplies the generated result to the booster amplifier 20. The up/down counter 724 of the AGC unit 27 also stops the counting operation and stabilises the circuitry operation, in the case that a clock synchronisation signal PLLOCK applied from the PLL 23 indicates that data is not clock-synchronised.

Referring back to Figure 2, the Viterbi decoder 29 Viterbi-decodes the PRF signal and outputs the Viterbi-decoded signal as a reproduced signal VITO.

As described above, the present invention corrects asymmetry of the RF signal to thereby improve performance of the Viterbi decoder. As a result, quality of the reproduced data can be improve.

## Claims

1. A data reproduction apparatus for an optical disc system in which a radio frequency RF signal detected from an optical recording medium is decoded to reproduce data, the data reproduction apparatus comprising:
an analog-to-digital converter ADC (21) for sampling the input RF signal and outputting the sampled signal;
a waveform equalizer (26) for waveform-equalizing the sampled signal; and
a decoder (29) for decoding the waveform-equalized signal and outputting the result;
**characterised by**:
an adder (22) for adding the sampled signal and an asymmetry correction signal and outputting the added signal;
a blank/defect detector (24) for generating a blank detection signal indicating a blank in the case that a variation in data is not detected from the added signal for a predetermined time; and
a correction signal generator (25) for calculating a digital sum value DSV from the received added signal, generating an asymmetry correction signal based on the calculated DSV, and outputting the generated asymmetry correction signal to the adder (22), wherein the correction signal generator (25) temporarily stops a DSV calculation operation with respect to the interval of the corresponding added signal, in the case that the blank detection signal is applied.

2. The data reproduction apparatus of claim 1, wherein said decoder (29) is a Viterbi decoder.

3. The data reproduction apparatus of claim 1 or 2, wherein said blank/defect detector (24) generates the blank detection signal in the case that the edge of the data is not detected from the received signal for the predetermined time, or a signal having a predetermined level or higher is not detected.

4. The data reproduction apparatus of any of claims 1 to 3, wherein said correction signal generator (25) receives the waveform equalized signal to calculate a DSV.

5. The data reproduction apparatus of claim 4, further comprising a multiplexer (31) for receiving the added signal and the waveform equalized signal and selecting one of the received signals according to an externally supplied select signal, to be supplied to the correction signal generator (25).

6. The data reproduction apparatus of claim 5, wherein said correction signal generator (25) comprises:
a sign detector (52) for detecting the sign of the input signal;
an up/down counter (53) for up- or down-counting the input signal according to the detected sign and outputting the count value wherein the up/down counter stops the counting operation during the time when the blank detection signal is applied;
a comparator (54) for obtaining the absolute value of the count value, comparing the size of the obtained absolute value with a predetermined threshold value, and outputting a first comparison resultant signal if the absolute value is larger than the threshold value; and
an operator (51) for generating an asymmetry correction signal having a sign different from that of the count value in the case that the first comparison resultant signal is applied.

7. The data reproduction apparatus of any of claims 2 to 6, further comprising:
a filter coefficient adjuster (28) for receiving the waveform equalised signal, extracting data corresponding to the intermediate level of the Viterbi decoder from the received signal, checking the size, and updating filter coefficients of the waveform equalizer based on the checked result; and
a gain controller (27) for receiving the waveform equalized signal, extracting data corresponding to the maximum level of the Viterbi decoder from the received signal, checking the size, and controlling the gain of the signal input to the ADC according to the checked result.

8. The data reproduction apparatus of claim 7, wherein the data corresponding to the intermediate level of said Viterbi decoder is a 3T level signal, and the maximum level is a 4T level signal, in which T is one clock period.

## Patentansprüche

1. Datenwiedergabevorrichtung für ein optisches Plattensystem, wobei ein aus einem optischen Aufzeichnungsmedium erfasstes Funk-Hochfrequenzsignal RF dekodiert wird, um Daten wiederzugeben, die Datenwiedergabevorrichtung umfasst:
einen Analog-Digital-Umsetzer ADC (21) für das Sampling des Eingabe-RF-Signals und für die Ausgabe des abgetasteten Signals,
einen Wellenform-Entzerrer (26) zum Entzerren der Wellenform des abgetasteten Signals und
einen Dekodierer (29) zum Dekodieren des wellenform-entzerrten Signals und zum Ausgeben des Resultats,
**gekennzeichnet durch**:
einen Addierer (22) zum Addieren des abgetasteten Signals und eines Asymmetrie-Korrektursignals und zum Ausgeben des addierten Signals,
einen Leerstellen-/Fehlerdetektor (24) zum Erzeugen eines Leerstellen-Erfassungssignals, das eine Leerstelle für den Fall anzeigt, dass aus dem addierten Signal für eine vorbestimmte Zeit keine Variation der Daten erfasst wird und
einen Korrektursignalerzeuger (25) zum Berechnen eines Wertes der numerischen Summe DSV aus dem empfangenen addierten Signal, zum Erzeugen eines Asymmetrie-Korrektursignals, basierend auf dem berechneten DSV,
und zum Ausgeben des erzeugten Asymmetrie-Korrektursignals an den Addierer (22), wobei der Korrektursignalerzeuger (25), für den Fall, dass das Leerstellen-Erfassungssignal angewendet wird, zeitweilig einen DSV-Berechnungsvorgang in Bezug auf das Intervall des entsprechenden addierten Signals anhält.

2. Datenwiedergabevorrichtung nach Anspruch 1, wobei der Dekoder (29) ein Viterbi-Dekoder ist.

3. Datenwiedergabevorrichtung nach Anspruch 1 oder 2, wobei der Leerstellen/Fehlerdetektor (24) das Leerstellen-Erfassungssignal für den Fall erzeugt, dass für die vorbestimmte Zeit die Datenflanke nicht aus dem empfangenen Signal erfasst wird oder kein Signal mit einer vorgegebenen Signalstufe oder höher erfasst wird.

4. Datenwiedergabevorrichtung nach einem der Ansprüche 1 bis 3, wobei der Korrektursignalerzeuger (25) das wellenform-entzerrte Signal empfängt, um einen DSV zu berechnen.

5. Datenwiedergabevorrichtung nach Anspruch 4, die weiterhin einen Multiplexierer (31) zum Empfangen des addierten Signals und des wellenform-entzerrten Signals und zum Auswählen, entsprechend einem von außen eingespeisten Auswahlsignal, eines der empfangenen Signale, das in den Korrektursignalerzeuger (25) einzuspeisen ist, umfasst.

6. Datenwiedergabevorrichtung nach Anspruch 5, wobei der Korrektursignalerzeuger (25) umfasst:
einen Vorzeichendetektor (52) zum Erfassen des Vorzeichens des Eingabesignals,
einen Aufwärts-Abwärts-Zähler (53) zum Aufwärts-Abwärts-Zählen des Eingabesignals entsprechend dem erfassten Vorzeichen und zum Ausgeben des Zählwertes, wobei der Aufwärts-Abwärts-Zähler den Zählvorgang während der Zeit, in der das Leerstellen-Erfassungssignal angewendet wird, anhält.
einen Komparator (54) zum Beschaffen des absoluten Wertes des Zählwertes, zum Vergleichen der Größe des beschafften absoluten Wertes mit einem vorgegebenen Schwellenwert und zum Ausgeben eines ersten Vergleichsresultat-Signals, wenn der absolute Wert größer als der Schwellenwert ist, und
einen Operator (51) zum Erzeugen eines Asymmetrie-Korrektursignals, mit einem von dem des Zählwertes unterschiedlichen Vorzeichen, für den Fall, dass das erste Vergleichsresultat-Signal angewendet wird.

7. Datenwiedergabevorrichtung nach einem der Ansprüche 2 bis 6, weiterhin umfassend:
einen Filterkoeffizient-Einsteller (28) zum Empfangen des wellenform-entzerrten Signals, zum Extrahieren der dem Zwischenpegel des Viterbi-Dekoders entsprechenden Daten aus dem empfangenen Signal und zum Aktualisieren der Filterkoeffizienten des Wellenform-Entzerrers, basierend auf dem geprüften Resultat, und
einen Verstärkungs-Controller (27) zum Empfangen des wellenform-entzerrten Signals, zum Extrahieren der dem Höchstpegel des Viterbi-Dekoders entsprechenden Daten aus dem empfangenen Signal undzum Überprüfen der Größe und Steuern der Verstärkung der Signateingabe in den ADC entsprechend dem Prüfresultat.

8. Datenwiedergabevorrichtung nach Anspruch 7, wobei die dem Zwischenpegel des Viterbi-Dekoders entsprechenden Daten ein 3T-Pegelsignal sind und der Höchstpegel ein 4T-Pegelsignal ist, wobei T eine Taktperiode ist.

## Revendications

1. Dispositif de reproduction de données pour un système de disque optique, dans lequel un signal à fréquence radio RF détecté à partir d'un support d'enregistrement optique, est décodé pour la reproduction de données, le dispositif de reproduction de données comprenant:
un convertisseur analogique / numérique ADC (21) pour échantillon le signal RF d'entrée et délivrer le signal échantillonné;
un égaliseur de forme d'onde (26) pour égaliser la forme d'onde du signal échantillon; et
un décodeur (29) pour décodeur le signal, dont la forme d'onde est égalisée, et délivrer le résultat;
**caractérisé par:**
un additionneur (22) pour additionner le signal échantillonné et un signal de correction de dissymétrie et délivrer le signal additionné;
un détecteur de blanc / de défaut (24) pour produire un signal de détection de blanc indiquant un blanc dans le cas où la variation des données n'est pas détectée par le signal additionné, pendant un intervalle de temps prédéterminé; et
un générateur de signal de correction (25) pour calculer une valeur de somme numérique DSV à partir des signaux additionnés reçus, générer un signal de correction de dissymétrie sur la valeur DSV calculée, et délivrer le signal de correction de dissymétrie produit à l'additionneur (22), le générateur (25) de signal de correction arrêtant temporairement une opération de calcul de la valeur DSV par rapport à l'intervalle du signal additionné correspondant dans le cas où le signal de détection de vis est appliqué.

2. Dispositif de reproduction de données selon la revendication 1, dans lequel ledit décodeur (29) est un décodeur de Viterbi.

3. Dispositif de reproduction de données selon la revendication 1 ou 2, dans lequel le détecteur de blanc / de défaut (24) génère le signal de détection de blanc dans le cas où le bord des données n'est pas détecté à partir du signal reçu pendant un intervalle de temps prédéterminé, ou un signal possédant un niveau prédéterminé ou un niveau plus élevé n'est pas détecté.

4. Dispositif de reproduction de données selon l'une quelconque des revendications 1 à 3, dans lequel ledit générateur (25) de signal de correction reçoit le signal, dont la forme d'onde est égalisée, pour calculer une valeur DSV.

5. Dispositif de reproduction de données selon la revendication 4, comprenant en outre un multiplexeur (31) pour recevoir le signal additionné et le signal de fond, dont la forme d'onde est égalisée, et sélectionner l'un des signaux reçus conformément à un signal de sélection délivré de l'extérieur, devant être envoyé au générateur (25) de signal de correction.

6. Dispositif de reproduction de données selon la revendication 5, dans lequel ledit générateur (25) de signal de correction comprend:
un détecteur de signe (52) pour détecter le signe du signal d'entrée;
un compteur progressif / régressif (53) pour réaliser le comptage progressif ou régressif du signal d'entrée en fonction du signe détecté et délivrer la valeur de comptage, le compteur progressif / régressif arrêtant l'opération de comptage pendant la durée pendant laquelle le signal de détection de vide est appliqué;
un comparateur (54) pour obtenir la valeur absolue de la valeur de comptage, comparer la taille de la valeur absolue obtenue par une valeur de seuil prédéterminée, et délivrer un premier signal résultant de comparaison si la valeur absolue est supérieure à la valeur de seuil; et
un opérateur (51) pour générer un signal de correction de dissymétrie possédant un signe différent de celui de la valeur de comptage dans le cas où le premier signal résultant de comparaison est appliqué.

7. Dispositif de reproduction de données selon l'une quelconque des revendications 2 à 6, comprenant en outre:
un dispositif (28) d'ajustement de coefficients de filtre pour recevoir le signal, dont la forme d'onde est égalisée, extraire des données correspondant au niveau intermédiaire du décodeur de Viterbi, à partir du signal reçu, vérifier la taille, et mettre à jour les coefficients de filtre de l'égaliseur de forme d'onde sur la base du résultat contrôlé; et
un contrôleur de gain (27) pour recevoir le signal, dont la forme d'onde est égalisée, extraire des données correspondant au niveau maximum de décodeur de Viterbi à partir du signal reçu, vérifier la taille et contrôler le gain du signal envoyé au convertisseur ADC conformément au résultat contrôlé.

8. Dispositif de reproduction de données selon la revendication 7, dans lequel les données correspondant au niveau intermédiaire du décodeur de Viterbi est un signal à 3T niveau et le niveau maximum est un signal de niveau à 4T, dans lequel T est une période d'horloge.
